# EUROPEAN PATENT SPECIFICATION

(11) **EP 4 543 766 B1**
(45) Date of publication and mention of the grant of the patent: **13.05.2026**
(21) Application number: 23739666.8
(22) Date of filing: 16.06.2023
(51) Int. Cl.: B65B 7/28, B65G 47/82, B21D 43/02, B21D 43/04, B21D 43/14, B21D 51/26

(54) **INDEXING SYSTEM FOR A MULTI-STATION PROCESSING APPARATUS**
INDEXIERUNGSSYSTEM FÜR EINE MEHRSTATIONSVERARBEITUNGSVORRICHTUNG
SYSTÈME D'INDEXAGE POUR UN APPAREIL DE TRAITEMENT MULTI-STATIONS

(30) Priority: 24.06.2022 US 202263366959 P
(43) Date of publication of application: 30.04.2025
(73) Proprietor: JOHN BEAN TECHNOLOGIES N.V., 9100 Sint-Niklaas (BE)
(72) Inventor: DE RIDDER, Maarten, 458 4RX Kuitaart, Zeeland (NL)
(74) Representative: AWA Sweden AB
(86) International application number: PCT/IB2023/056283
(87) International publication number: WO 2023/248089

(56) References cited:
- WO-A1-2009/110066
- WO-A1-2018/190238
- US-A- 1 034 153

## Description

### BACKGROUND

The present invention pertains to an indexing system for positioning or distributing work products that the arrive in a single file stream to multiple workstations. One example of this situation is to distribute filled containers or cans to two side-by-side closure stations. The closure station can be in the form of two seaming head that seam a cover to the top of the container. Current technology for this function includes pneumatic cylinders that push the containers along on different tracks, one for each workstation. However, with pneumatic cylinders dead or lost time occurs due to the need to retract the cylinders in preparation to push the next container forward.

US 1 034 153A discloses a can ending machine.

The present disclosure seeks to provide a solution to the need to feed the workstations with work product, wherein:
- The feed mechanism uses a minimum of components, and so provides a cost-effective solution.
- No lost/dead time is present; the only non-functional movement of the mechanism is established as soon as the previous can is on its position and can be executed very fast.
- The spacing in between the arriving work products, e.g., containers, is of no importance.
- The feed mechanism is flexible: when only one workstation is operating, the indexing mechanism can be replaced by a turret with pockets for the work product, that simply rotates to feed the single workstation.

### SUMMARY

This summary is provided to introduce a selection of concepts in a simplified form that are further described below in the Detailed Description.

According to the invention an indexing system for a multi-station apparatus is provided for processing work products. The indexing system includes a multi-position indexing platform having a plurality of stations arranged along an arcuate path about an axis, the stations comprising a receiving station for receiving work products for processing, at least two processing stations where work products are processed, a first processing station positioned on the arcuate path extending clockwise from the receiving station toward the discharge station, and a second processing station positioned on the arcuate path extending counterclockwise from the receiving station toward the discharge station, and a discharge station from which work products that have been processed are removed from the platform, the discharge station located on the arcuate path downstream from the processing stations, and a pivot arm assembly rotatable about the axis to move the work products from the receiving station in a clockwise direction to the first processing station and in a counterclockwise direction to the second processing station.

In any of the embodiments described herein, wherein the pivot arm assembly when rotating about the axis to move the work products from the receiving station to a processing station, also moving processed work products from the processing station to the discharge station.

In any of the embodiments described herein, wherein the pivot arm assembly comprises a first pivot arm rotatable about the axis in clockwise and counterclockwise directions to move work products from the receiving station to the processing stations and from the processing stations to the discharge station.

In any of the embodiments described herein, wherein the first pivot arm is rotatable about the central axis in the clockwise direction to push work products from the receiving station to the first processing station and is rotatable about the central axis in the counterclockwise direction to push work products from the receiving station to the second processing station.

In any of the embodiments described herein, wherein when the first pivot arm is rotated about the axis in the clockwise direction to move work products from the receiving station to the first processing station, the first pivot arm is in position without further movement, to rotate about the central axis in the counterclockwise direction to move work products from the receiving station to the second processing station.

In any of the embodiments described herein, wherein the first pivot arm has portions defining a contact surface for bearing against the work products when pushing the work products from the receiving station to the first and second processing stations.

In any of the embodiments described herein, wherein the pivot arm assembly comprises a second pivot arm extending laterally from the first pivot arm and rotatable about the axis in the clockwise and counterclockwise directions to retain the work products against the first pivot arm as the work products move from the receiving station to the first and second processing stations.

In any of the embodiments described herein, wherein the second pivot arm moves the work product from the first and second processing stations to the discharge station as the first pivot arm moves the work products from the receiving station to the first and second processing stations.

In any of the embodiments described herein, wherein the second pivot arm is extendable relative to the first pivot arm to be disposed relative to the first pivot arm in a rotationally leading position as the first pivot arm rotates in the clockwise or counterclockwise directions.

In any of the embodiments described herein, wherein the path along which the plurality of stations are arranged is a circular path about the axis,

In another embodiment according to the invention, a method of presenting work products to be processed to a multi-station processing apparatus and removing the processed work products from the processing apparatus is provided. The method includes receiving work products to be processed at a receiving station from a stream of work products to be processed, moving work products to be processed from the receiving station along an arcuate path in a clockwise direction to a first processing station and in a counterclockwise direction to a second processing station, and moving the work products after being processed along the arcuate path from the first processing station to the discharge station and from the second processing station to the discharge station.

In any of the embodiments described herein, wherein the work products are moved from the receiving station to the first and second processing stations along the arcuate path by a swing arm assembly rotatable about an axis.

In any of the embodiments described herein, wherein the swing arm assembly rotates in a first direction about the axis to move work products from the receiving station to the first processing station and rotates about the axis in a second direction to move work products from the receiving station to the second processing station.

In any of the embodiments described herein, further comprising retaining the work products to the swing arm assembly as the swing arm assembly moves the work products from the receiving station to the first and second processing stations.

According to the invention, an indexing system for a multi-head seamer apparatus is provided for sealing the tops of containers with covers. The indexing system includes a multi-position indexing platform having a plurality of stations arranged along an arcuate path about an axis, the stations comprising a receiving station for receiving containers to which covers are to be sealed, and a discharge station from which containers with covers sealed thereto are removed from the platform, the receiving station and discharge station located on the arcuate path diametrically opposite to each other relative to the axis, and at least two sealing stations where at covers are sealed to the containers, a first sealing station positioned on the arcuate path extending clockwise from the receiving station toward the discharge station, and a second sealing station positioned on the arcuate path extending counterclockwise from the receiving station toward the discharge station, and a pivot arm assembly to rotatably toggle about the pivot axis to move the containers from the receiving station in a clockwise direction to the first sealing station and in a counterclockwise direction to the second sealing station.

### DESCRIPTION OF THE DRAWINGS

The foregoing aspects and many of the attendant advantages of this invention will become more readily appreciated as the same become better understood by reference to the following detailed description, when taken in conjunction with the accompanying drawings, wherein:
FIGURE 1 is a schematic isometric view of a multi-station processing apparatus with an indexing system in accordance with the present invention;
FIGURE 2 is a schematic top isometric view of the indexing system of FIGURE 1;
FIGURE 3 is a top view of FIGURE 2;
FIGURES 4A to 4H are schematic views of the positions of the indexing system of

### DETAILED DESCRIPTION

The description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the disclosure to the precise forms disclosed.

In the following description, numerous specific details are set forth in order to provide a thorough understanding of exemplary embodiments of the present disclosure. It will be apparent to one skilled in the art, however, that many embodiments of the present disclosure may be practiced without some or all of the specific details. In some instances, well known process steps have not been described in detail in order not to unnecessarily obscure various aspects of the present disclosure. Further, it will be appreciated that embodiments of the present disclosure may employ any combination of features described herein.

The present application may include references to "directions," such as "forward," "rearward," "front," "back," "ahead," "behind," "upward," "downward," "above," "below," "horizontal," "vertical," "top," "bottom," "right hand," "left hand," "in," "out," "extended," "advanced," "retracted," "proximal," and "distal." These references and other similar references in the present application are only to assist in helping describe and understand the present disclosure and are not intended to limit the present invention to these directions.

The present application may include modifiers such as the words "generally," "approximately," "about," or "substantially." These terms are meant to serve as modifiers to indicate that the "dimension," "shape," "temperature," "time," or other physical parameter in question need not be exact, but may vary as long as the function that is required to be performed can be carried out. For example, in the phrase "generally circular in shape," the shape need not be exactly circular as long as the required function of the structure in question can be carried out.

The present application may refer to "product," "work product," "workpiece " synonymously. Examples of a product, work product or workpiece described in the present application include containers and cans. But the present disclosure is not limited to containers or cans, but may include all manner of work products as described herein.

Also, the present application provides as one example the seaming of tops to cans. As described herein the indexing system of the present application is not limited for use for this purpose. Rather, numerous other operations can be performed with respect to the containers or cans, as described herein. Further, innumerable different operations or processes can be carried out at the work stations to which work products are delivered to and removed from, using the indexing system of the present disclosure.

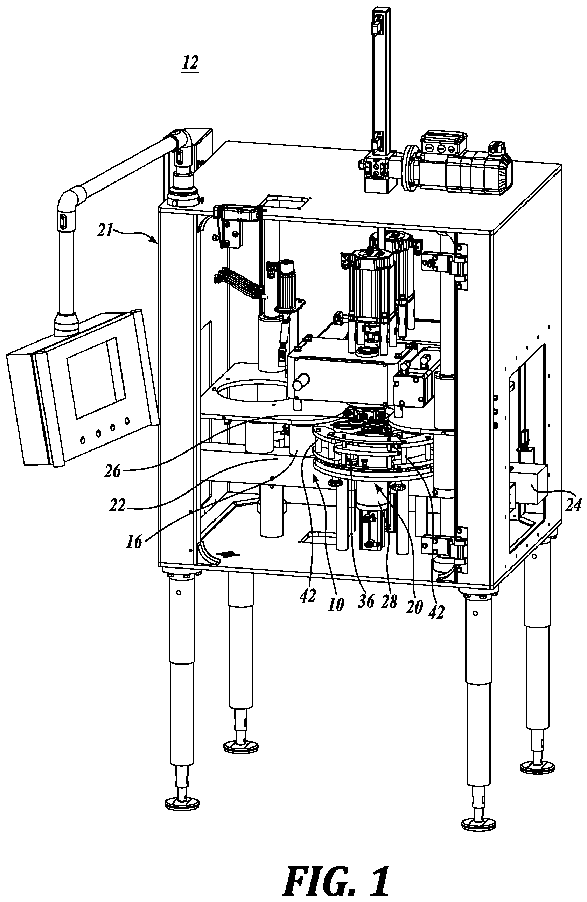

FIGURES 1-3 shows an indexing system 10 according to the present invention installed in conjunction with a multi-station processing apparatus 12. Although the processing apparatus 12 is shown in the form of an apparatus for seaming (sealing) covers 14 to the tops of containers in the form of cans 16, the indexing system can be used with all manner of processing apparatus. For example, the processing apparatus may attach covers or tops to cans and other types of containers by techniques other than by seaming, for example by gluing, heat fusing, twisting, screwing, stamping, etc. Further, the apparatus may perform a process other than the closing of a container, such as filling or adding contents to the container, or the apparatus may perform other types of processes on a wide range of work pieces that are not containers or cans, such as welding a work piece, painting a work piece, machining a work piece, assembling a work piece, inspecting a work piece, etc. The indexing system 10 is able to quickly, efficiently, and reliably move or transfer work pieces from a receiving station to multiple processing stations for processing and then move or transfer the processed work pieces to a discharge station in a space efficient manner.

FIGURES 1-3 provide an example of a possible configuration and use of the indexing system 10 of the present invention. In this regard, the indexing system 10 includes a multi-position platform or table 20 mounted within a housing 21. The platform is disposed in alignment with an infeed or receiving conveyance in the form of conveyor 22 and an outfeed or discharge conveyance in the form of conveyor 24. Openings are provided in the housing to provide clearance for the infeed and outfeed conveyors 22 and 24.

Although the conveyors 22 and 24 are schematically shown, the conveyors can be of standard construction, composed of endless belts 30 and 32 that train around end rollers, with one of the end rollers being powered or driven in a standard manner, for example, by electric motors, hydraulic motors or pneumatic motors. Between the end rollers, the belts 30 and 32 can be supported by idler rollers, a slider bed, or by other structure in a standard manner.

An infeed or receiving station 44 of the system 10, for the containers 16, is defined by the intersection of the infeed or receiving conveyor 22 and the table 20. Correspondingly an outfeed or discharge station 46 of the system 10, for the containers 16, is defined by the intersection of the outfeed or discharge conveyor 24 and the table 20. To this end, openings may be formed in the platform 20 to provide clearance for the adjacent ends of the conveyors 22 and 24.

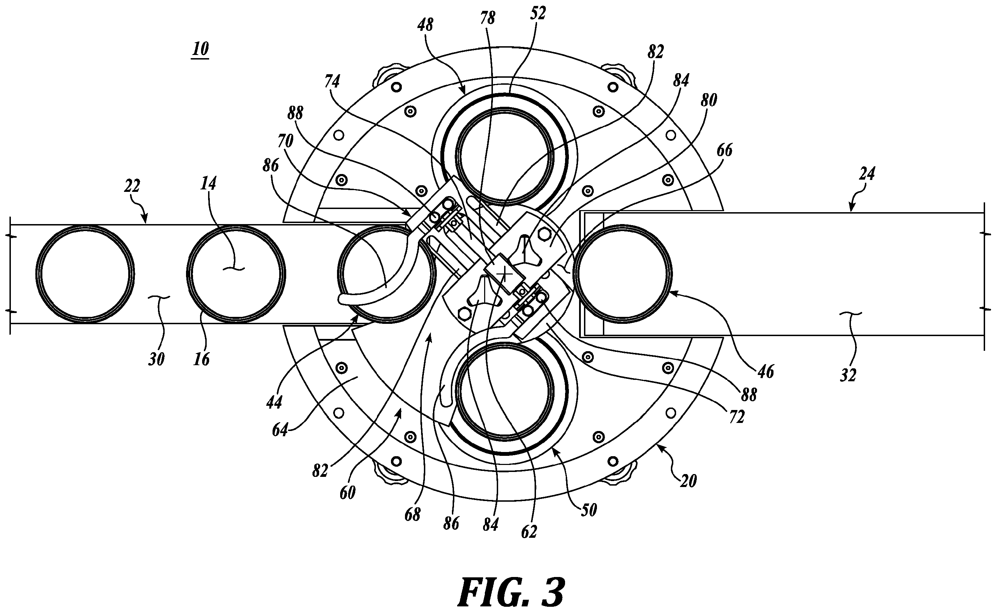

The platform 20 is positioned beneath a can seaming apparatus 12 configured as having two overhead seaming heads 26 positioned relative to each other in a direction laterally to the longitudinal direction of the infeed conveyor 22, see FIGURE 3. The locations on the platform beneath the seaming heads correspond to first and second processing stations 48 and 50, respectively. The seaming heads function to seam the covers 14 on to the tops of the containers (cans).

Lift mechanisms 28 are positioned below and beneath the platform 20 at processing stations 48 and 50 to lift the containers 16 to be sealed up to the overhead seaming heads 26 so that the covers 14 can be sealed to the containers by a standard seaming process. Thereafter, the lift mechanisms 28 lower the sealed containers 16 back down to the elevation of the platform 20 so that the containers 16 can be moved to the outfeed station and placed on the outfeed conveyor 24.

Openings are formed in the platform at processing stations 48 and 50 to receive close fitting circular pads 52 on which the containers 16 are placed. The pads 52 are raised toward and lowered from the seaming heads 26 by the lift mechanisms 28. When in lowered position, the tops surfaces of the pads are substantially co-planar with the top surface of the platform 20.

The lift mechanisms 28 may include actuators for raising and lowering the pads 52. Such actuators may be of numerous different types, including, for example, pneumatic or hydraulic cylinders, motor driven leadscrews, magnetic coil linear actuators.

The platform 20 is shown as being generally circular in shape, but can be of other shapes, such as, for example, hexagonal or octagonal or pentagonal. The top surface of the platform is depicted as substantially co-planar with the upper runs of the belts 30 and 32 of the conveyors 22 and 24 to facilitate transfer to the containers 16 from the infeed conveyor 22 to the table 20 at the infeed station 44 and from the table to the outfeed conveyor 24 at the outfeed station 46.

A retaining fence 36 can extend along the perimeter of the generally circular platform 20 corresponding to each side of the conveyors 22 and 24, thereby, if necessary to retain the containers 16 on the platform 20 as the containers travel from the infeed station 44 to the processing stations 48 and 50 and thereafter from the processing stations to the outfeed station 46.

As shown in FIGURE 1, the fence 36 may be composed of vertically spaced-apart upper and lower arcuate rail sections 40 supported above the platform 20 by upright posts 42. If needed, the fence 36 can retain containers 16 on platform 20 as the containers travel from the infeed station 44 to processing stations 48 and 50 located at the seaming heads 26, as well as when the seamed containers 16 travel from the processing stations 48 and 50 to the outfeed station 46. Of course, the fence 36 can be of constructions different from that described above and perform the desired function.

The containers 16 are moved from the infeed station 44 to the processing stations 48 and 50 and from the processing stations to the outfit station 46 by pivot arm assembly 60 that pivots about a central axis 62. When the arm assembly pivots in a first direction, e.g., clockwise, the container 16 is moved from the infeed station 44 to the first processing station 48. Correspondingly, when the pivot arm assembly pivots in the opposite direction, e.g., counterclockwise, the container is moved from the infeed station 44 to the second processing station 50. Thus, in this manner, the pivot arm assembly 60 can toggle clockwise and counterclockwise about axis 62 to alternatively transfer containers from the infeed station 44 to the first and second processing stations 48 and 50.

The pivot arm assembly 60 includes first pivot arm 64 constructed with the substantial circular base section 66 centered at axis 62 to pivot relative thereto. The pivot arm 64 also includes a contoured shank suction 68 extending radially from the circular base section 66 toward the outer perimeter of the platform 20. The sides of the shrank section are contoured to correspond to be outer circumference of the containers 16. If the containers 16 are of a shape other than cylindrical as shown in the figures, the sides of the shank section 68 can be contoured to be compatible with the shape of the container or other work product being handled by the indexing system 10.

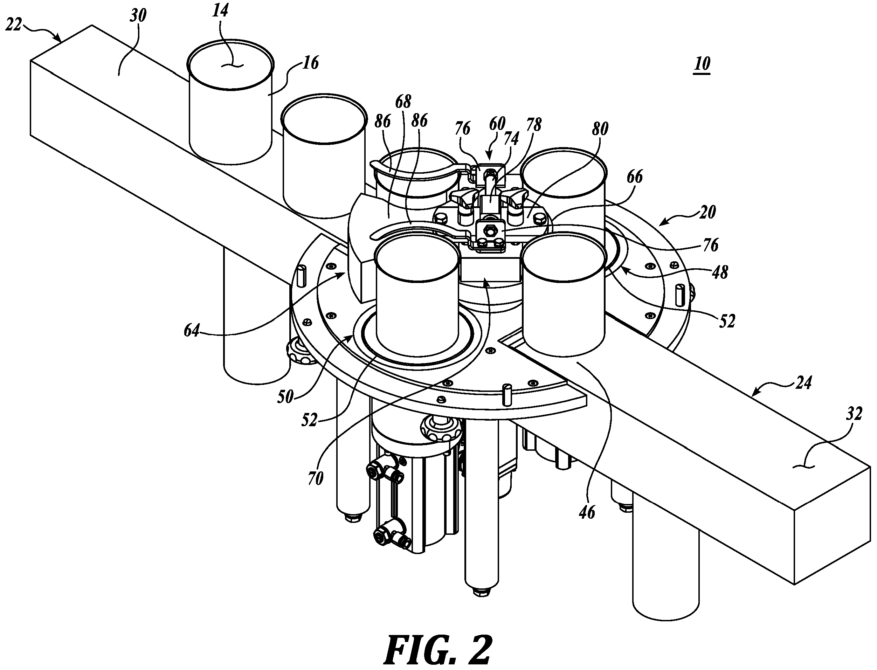

As shown in FIGURES 2 and 3, the first pivot arm is sized and shaped so that the opposite sides of the shank section 68 closely correspond to the outer circumferences of the container 16 positioned at the infeed station as well as the container 16 positioned at the first or second processing stations 48 and 50.

In the situation shown in FIGURES 2 and 3, the sides of the shank section 68 extend sufficiently around the circumference of the container 16 so as to hold the container captive against the curved side of the shank section with the assistance of a second pivot arm 70 which extends transversely from the base section 66 of the first pivot arm 64 relative to the length of the first pivot arm.

The second pivot arm 70 may be mounted on the first pivot arm 64 to move or shuttle longitudinally along its length relative to the first pivot arm so as to extend from a first side of the first pivot arm or alternatively form the opposite side of the first pivot arm. In this manner, the second pivot arm cooperates with the side of the first pivot arm that is being used to index transfer (push) the container from the infeed station to the one of the processing stations.

For example, as shown in FIGURE 3, the first pivot arm is in position to transfer the container 16 from the infeed station 44 to the first processing station 48. As such, the second pivot arm is extended so as to be disposed between the infeed station and the first processing station, or in other words in a "leading" position relative to the direction of rotation of the first pivot arm 64. In this position, the second pivot arm 70 holds the container against the curved shank portion 68 of the first pivot arm 64 as the container is transferred from the infeed station 44 to the first processing station 48. Also, the opposite end of the second pivot arm is within the perimeter of the first arm circular base section 66 so as not to interfere with the containers that may be positioned at the second processing station 50 or at the outfeed station 46.

Moreover, the width of the second pivot arm is sized to fit closely between the containers at the infeed station and the first or second processing station. As such, when the pivot arm assembly is rotated to move a container from the infeed station to the first or second processing station, the container currently at the first or second processing station is simultaneously moved (pushed) by the extended section of the second pivot arm to the outfeed station.

The second pivot arm is mounted within a cross slot 72 formed in the base section 66 of the first pivot arm to shuttle back and forth along is length there by to extend beyond one side of the first pivot arm or the other side of the first pivot arm, depending on the direction of rotation of the first pivot arm. As noted above the second pivot arm is actuated to be in a rotationally leading position relative to the first pivot arm regardless of whether the first pivot arm is rotating in the clockwise or counterclockwise direction.

The second pivot arm includes a guide rod 74 that extends centrally along the length of the second pivot arm at an elevation above the top surface of the second pivot arm. The ends of the guide rod are held in place by brackets 76 extending upwardly from the end portions of the second pivot arm. The guide rod extends through a centrally located, close fitting guide block 78 so that the second pivot arm is restrained to move longitudinally along its length. The guide block is mounted on a cross-plate 80, which in turn is mounted to the base section 66 of the first pivot arm on opposite sides of slot 72.

The second pivot arm may be powered to shuttle back and forth by various actuating systems, including, for example, a pneumatic actuator or magnetic coil actuator or a piezoelectric actuator, all of which are well known and can take the configuration of the guide rod 74 and guide block 78.

Longitudinal side slots 82 are formed along the length of the second pivot arm to provide clearance for hardware members used to attach the pivot arm assembly 60 to the flange of a motor that operates to pivot the pivot arm assembly. Manually operable twist knobs 84 are provided to tighten or loosen the hardware members.

Curved retaining arms 86 extend laterally from each end portion of the second pivot arm 70 to extend over the container 16 which is being transferred from the infeed station 44 to either the first or second processing station 48 or 50. The retaining arms 86 prevent the cover 14 from dislodging from the container 16 under the acceleration imposed on the container when being transferred from the infeed station 44 to the first or second processing station 48/50.

As shown, the retaining arms 86 include a longitudinal mounting section that is attached to the top surface of the second pivot arm by hardware members 88. The retaining arms 86 also include a curved projecting section which extends closely over the tops of the container 16 and cover 14. The curved projecting sections are shaped and sized to extend partially around, but spaced from, the container 16 positioned at the first or second processing station 48/50 corresponding to the retracted end of the second pivot arm 70 so as to not interfere with the container. Of course, the retaining arms 86 can be shaped or otherwise configured differently than as illustrated while performing the required function.

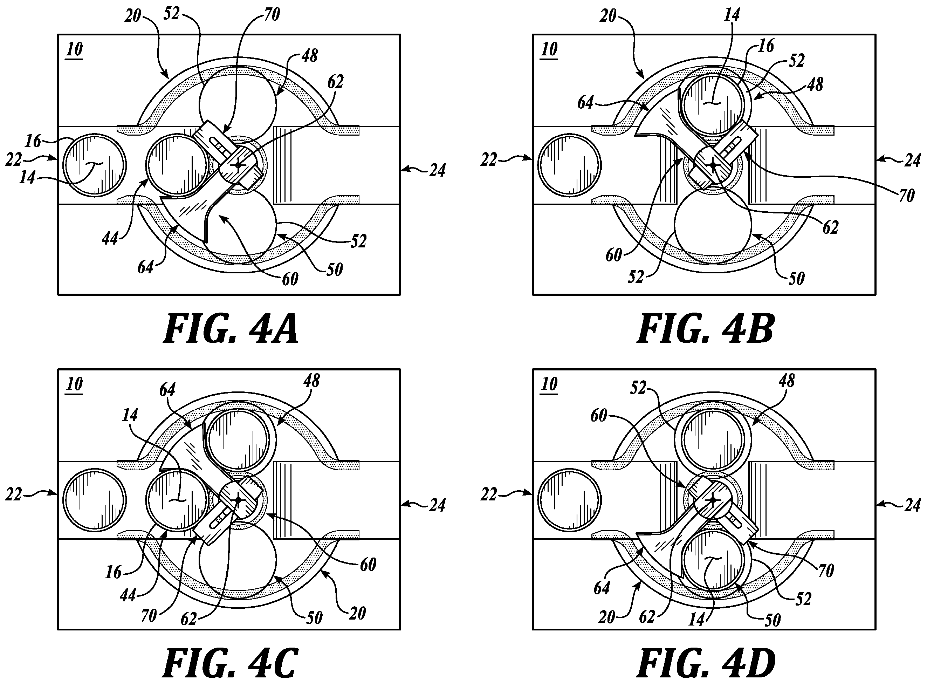

The operation of the indexing system 10 is illustrated in FIGURES 4A-4H, wherein FIGURE 4A shows the starting position of the system with a container 16 is positioned at the infeed station 44. The first pivot arm 64 is located at a diagonally downward orientation so as to be in position to push the container 16 clockwise from the infeed station 44 to the first processing station 48. Correspondingly, the second pivot arm 70 is extended to be disposed in a diagonally upwardly orientation to be positioned at the side of the container 16 opposite to the location of the first pivot arm 64.

FIGURE 4B shows the container 16 being moved (pushed) clockwise from the infeed station 44 to the first processing station 48 by rotation of first and second pivot arms 64 and 70 about axis 62.

FIGURE 4C shows a second container 16 advanced forwardly to be at the infeed station 44. The first pivot arm 64 remains in the same position as in FIGURE 4B. However, the second pivot arm 70 is shuttled to extend diagonally downwardly so as to be positioned on the side of the container 16 opposite to the location of the first pivot arm 64 before the container 16 is advanced to the infeed station 44.

FIGURE 4D shows the container 16 being moved counterclockwise from the infeed station 44 to the second processing station 50 by rotation of the first and second pivot arms 64 and 70 about axis 62.

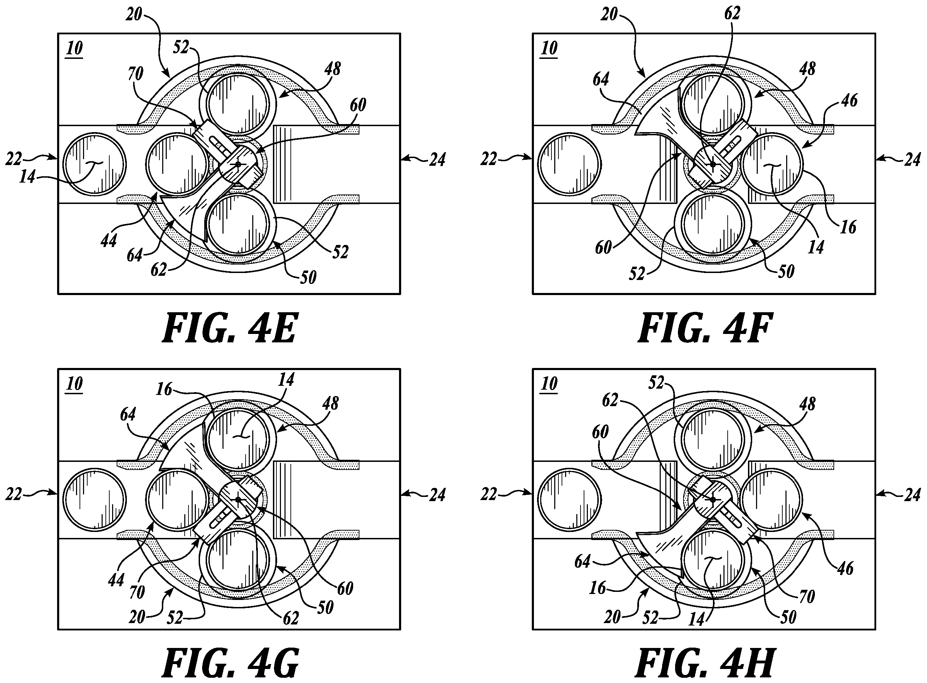

FIGURE 4E shows further container 16 advanced to the infeed station 44, while the first pivot arm remains in the position shown in FIGURE 4D. However, the second pivot arm has been shuttled to extend diagonally upwardly so as to be on the side of the container 16 opposite to the location of the first pivot arm 64, thereby being in position to transfer the container from the infeed station clockwise to the first processing station 48. Also, the second pivot arm 70 is adjacent to the container at the first processing station 48.

FIGURE 4F shows that the container 16 which was at the infeed station in FIGURE 4E is pushed clockwise to the first processing station 48 by rotation of the first and second pivot arms 64 and 70 about axis 62. Simultaneously, the container 16, which was at the first processing station 48, is moved further clockwise to the outfeed station 46 by being pushed thereto by the rotation of the second pivot arm 70.

FIGURE 4G shows that a further container 16 has been positioned at the infeed station 44 so as to be ready for movement to the second processing station 50. In this regard, the first pivot arm 64 is in the same position as in FIGURE 4F; however, the second pivot arm 70 has been shuttled to now extend into a diagonally downward position so as to be located between the container at the infeed station 44 and the container located at the second processing station 50. Also, the container 16 that was at the outfit station 46 in FIGURE 4F has now been removed by the outfeed conveyor 24

FIGURE 4H shows that the container 16 at the infeed station 44 in FIGURE 4G has been pushed counterclockwise to the second processing station 50 by rotation of the first and second pivot arms 64 and 70 arms about axis 62. Simultaneously, the container 16, which was at the second processing station 48, is moved further counterclockwise by the second pivot arm to the outfeed station 46.

As shown in FIGURES 4A to 4H, the indexing system 10 operates to rapidly transfer containers 16 from the infeed station 44 to the first and second processing stations 48 and 50 in an efficient manner, with a minimum of moving parts and no lost motion. In this regard, the first pivot arm moves (pushes) a container from an infeed location to a processing location with each 90 degree pivot rotation. There is no lost "return" movement of the first pivot arm as would be the case if, for example, a pneumatic actuator was used to push containers along different tracks aligned with the two processing stations 48 and 50.

Further, processed containers 16 are efficiently moved from the first and second processing stations 48 and 50 to the outfeed station 46 at the same time, and with the same rotation of the pivot arms 64 and 70 used to move the containers to and from the infeed station to the processing stations 48 and 50.

Although the forgoing description concerns moving containers 16 to stations 48 and 50 for various types of processing, such as filling the container or attaching/seaming covers on the containers, the indexing system 10 of the present disclosure can be used for indexing innumerable types of work products from an infeed station to multiple processing stations, for example, for indexing parts or components for welding, brazing, soldering, gluing, painting, nailing, drilling, milling, grinding, boring, reaming, polishing, or other type(s) of machining operations.

While illustrative embodiments have been illustrated and described, it will be appreciated that various changes can be made therein without departing from the scope of the inventior as defined by the appended claims.

## Claims

1. An indexing system (10) for a multi-station apparatus for processing work products, the indexing system comprising:
a multi-position indexing platform (20) having a plurality of stations arranged along an arcuate path about an axis, the stations comprising:
a receiving station (44) for receiving work products for processing,
at least two processing stations (48, 50) where work products are processed, a second processing station (50) positioned on the arcuate path extending counterclockwise from the receiving station (44) toward a discharge station (46) from which work products that have been processed are removed from the platform (20), the discharge station (46) located on the arcuate path downstream from the processing stations (48, 50); **characterized by**
a first processing station (48) positioned on the arcuate path extending clockwise from the receiving station (44) toward the discharge station (46), and
a pivot arm assembly (60) rotatable about the axis to move the work products from the receiving station (44) in a clockwise direction to the first processing station (48) and in a counterclockwise direction to the second processing station (50).

2. The indexing system of claim 1, wherein the pivot arm assembly (60) when rotating about the axis to move the work products from the receiving station (44) to a processing station, also moving processed work products from the processing station to the discharge station (46).

3. The indexing system of claim 1 or 2, wherein the pivot arm assembly (60) comprises a first pivot arm (64) rotatable about the axis in clockwise and counterclockwise directions to move work products from the receiving station (44) to the processing stations (48, 50) and from the processing stations (48, 50) to the discharge station (46).

4. The indexing system of claim 3, wherein the first pivot arm (64) is rotatable about the central axis in the clockwise direction to push work products from the receiving station (44) to the first processing station (48) and is rotatable about the central axis in the counterclockwise direction to push work products from the receiving station (44) to the second processing station (50).

5. The indexing system of claim 4, wherein when the first pivot arm (64) is rotated about the axis in the clockwise direction to move work products from the receiving station (44) to the first processing station (48) , the first pivot arm (64) is in position without further movement, to rotate about the central axis in the counterclockwise direction to move work products from the receiving station (44) to the second processing station (50).

6. The indexing system of any one of clam 3-5, wherein the first pivot arm (64) has portions defining a contact surface for bearing against the work products when pushing the work products from the receiving station (44) to the first and second processing stations (48, 50).

7. The indexing system of Claim 3, wherein the pivot arm assembly (60) comprises a second pivot arm (70) extending laterally from the first pivot arm (64) and rotatable about the axis in the clockwise and counterclockwise directions to retain the work products against the first pivot arm (64) as the work products move from the receiving station (44) to the first and second processing stations (48, 50).

8. The indexing system of Claim 7 wherein the second pivot arm (70) moves the work product from the first and second processing stations (48, 50) to the discharge station (46) as the first pivot arm (64) moves the work products from the receiving station (44) to the first and second processing stations (48, 50).

9. The indexing system of Claim 7 or 8, wherein the second pivot arm (70) is extendable relative to the first pivot arm (64) to be disposed relative to the first pivot arm (64) in a rotationally leading position as the first pivot arm (64) rotates in the clockwise or counterclockwise directions.

10. The indexing system of any one of claims 1-9, wherein the path along which the plurality of stations are arranged is a circular path about the axis,

11. A method of presenting work products to be processed to a multi-station processing apparatus and removing the processed work products from the processing apparatus, comprising:
receiving work products to be processed at a receiving station (44) from a stream of work products to be processed, **characterized by**
moving work products to be processed from the receiving station (44) along an arcuate path in a clockwise direction to a first processing station (48) and in a counterclockwise direction to a second processing station (50); and
moving the work products after being processed along the arcuate path from the first processing station (48) to the discharge station (46) and from the second processing station (50) to the discharge station (46).

12. The method of claim 11, wherein the work products are moved from the receiving station (44) to the first and second processing stations (48, 50) along the arcuate path by a swing arm assembly rotatable about an axis.

13. The method of Claim 12, wherein the swing arm assembly rotates in a first direction about the axis to move work products from the receiving station (44) to the first processing station (48) and rotates about the axis in a second direction to move work products from the receiving station (44) to the second processing station (50).

14. The method of any one of claims 12-13, further comprising retaining the work products to the swing arm assembly as the swing arm assembly moves the work products from the receiving station (44) to the first and second processing stations (48, 50).

15. A multi-head seamer apparatus for sealing the tops of containers with covers, the apparatus comprising an indexing system of any of claims 1-10, comprising:
the receiving station (44) being configured for receiving containers to which covers are to be sealed, and the discharge station (46) from which containers with covers sealed thereto are configured to be removed from the platform, the receiving station (44) and discharge station (46) being located on the arcuate path diametrically opposite to each other relative to the axis; and
at least two sealing stations where at covers are sealed to the containers, a first sealing station positioned on the arcuate path extending clockwise from the receiving station toward the discharge station, and a second sealing station positioned on the arcuate path extending counterclockwise from the receiving station (44) toward the discharge station (46); and
the pivot arm assembly (60) being configured to rotatably toggle about the pivot axis to move the containers from the receiving station (44) in a clockwise direction to the first sealing station and in a counterclockwise direction to the second sealing station.

## Patentansprüche

1. Indexierungssystem (10) für eine Multistationen-Vorrichtung zum Verarbeiten von Arbeitserzeugnissen, wobei das Indexierungssystem Folgendes umfasst:
eine Multipositions-Indexierungsplattform (20), die eine Vielzahl von Stationen aufweist, die entlang eines bogenförmigen Pfads um eine Achse herum angeordnet sind, wobei die Stationen Folgendes umfassen:
eine Aufnahmestation (44) zum Aufnehmen von Arbeitserzeugnissen zum Verarbeiten,
mindestens zwei Verarbeitungsstationen (48, 50), in denen Arbeitserzeugnisse verarbeitet werden,
eine zweite Verarbeitungsstation (50), die auf dem bogenförmigen Pfad positioniert ist, der sich gegen den Uhrzeigersinn von der Aufnahmestation (44) in Richtung einer Ausgabestation (46) erstreckt, aus der verarbeitete Arbeitserzeugnisse von der Plattform (20) entfernt werden, wobei sich die Ausgabestation (46) auf dem bogenförmigen Pfad nach den Verarbeitungsstationen (48, 50) befindet; **gekennzeichnet durch** eine erste Verarbeitungsstation (48), die auf dem bogenförmigen Pfad positioniert ist, der sich im Uhrzeigersinn von der Aufnahmestation (44) in Richtung der Ausgabestation (46) erstreckt, und
eine Schwenkarmanordnung (60), die um die Achse herum drehbar ist, um die Arbeitserzeugnisse von der Aufnahmestation (44) im Uhrzeigersinn zu der ersten Verarbeitungsstation (48) und gegen den Uhrzeigersinn zu der zweiten Verarbeitungsstation (50) zu bewegen.

2. Indexierungssystem nach Anspruch 1, wobei die Schwenkarmanordnung (60), wenn sie sich um die Achse herum dreht, um die Arbeitserzeugnisse von der Aufnahmestation (44) zu einer Verarbeitungsstation zu bewegen, auch verarbeitete Arbeitserzeugnisse von der Verarbeitungsstation zu der Ausgabestation (46) bewegt.

3. Indexierungssystem nach Anspruch 1 oder 2, wobei die Schwenkarmanordnung (60) einen ersten Schwenkarm (64) umfasst, der um die Achse herum im Uhrzeigersinn und gegen den Uhrzeigersinn drehbar ist, um Arbeitserzeugnisse von der Aufnahmestation (44) zu den Verarbeitungsstationen (48, 50) und von den Verarbeitungsstationen (48, 50) zu der Ausgabestation (46) zu bewegen.

4. Indexierungssystem nach Anspruch 3, wobei der erste Schwenkarm (64) um die zentrale Achse herum im Uhrzeigersinn drehbar ist, um Arbeitserzeugnisse von der Aufnahmestation (44) zu der ersten Verarbeitungsstation (48) zu schieben, und um die zentrale Achse gegen den Uhrzeigersinn drehbar ist, um Arbeitserzeugnisse von der Aufnahmestation (44) zu der zweiten Verarbeitungsstation (50) zu schieben.

5. Indexierungssystem nach Anspruch 4, wobei, wenn der erste Schwenkarm (64) um die Achse herum im Uhrzeigersinn gedreht wird, um Arbeitserzeugnisse von der Aufnahmestation (44) zu der ersten Verarbeitungsstation (48) zu bewegen, der erste Schwenkarm (64) sich in
einer Position ohne weitere Bewegung befindet, um sich um die zentrale Achse herum gegen den Uhrzeigersinn zu drehen, um Arbeitserzeugnisse von der Aufnahmestation (44) zu der zweiten Verarbeitungsstation (50) zu bewegen.

6. Indexierungssystem nach einem der Ansprüche 3-5, wobei der erste Schwenkarm (64) Abschnitte aufweist, die eine Kontaktfläche zum Anliegen an den Arbeitserzeugnissen definieren, wenn die Arbeitserzeugnisse von der Aufnahmestation (44) zu der ersten und der zweiten Verarbeitungsstation (48, 50) geschoben werden.

7. Indexierungssystem nach Anspruch 3, wobei die Schwenkarmanordnung (60) einen zweiten Schwenkarm (70) umfasst, der sich seitlich vom ersten Schwenkarm (64) erstreckt und um die Achse herum im Uhrzeigersinn und gegen den Uhrzeigersinn drehbar ist, um die Arbeitserzeugnisse am ersten Schwenkarm (64) zu halten, während sich die Arbeitserzeugnisse von der Aufnahmestation (44) zu der ersten und der zweiten Verarbeitungsstation (48, 50) bewegen.

8. Indexierungssystem nach Anspruch 7, wobei der zweite Schwenkarm (70) das Arbeitserzeugnis von der ersten und der zweiten Verarbeitungsstation (48, 50) zu der Ausgabestation (46) bewegt, während der erste Schwenkarm (64) die Arbeitserzeugnisse von der Aufnahmestation (44) zu der ersten und der zweiten Verarbeitungsstation (48, 50) bewegt.

9. Indexierungssystem nach Anspruch 7 oder 8, wobei der zweite Schwenkarm (70) relativ zum ersten Schwenkarm (64) ausfahrbar ist, um relativ zum ersten Schwenkarm (64) in einer drehbaren vorderen Position angeordnet zu sein, wenn sich der erste Schwenkarm (64) im Uhrzeigersinn oder gegen den Uhrzeigersinn dreht.

10. Indexierungssystem nach einem der Ansprüche 1-9, wobei der Pfad, entlang dem die Vielzahl von Stationen angeordnet sind, ein kreisförmiger Pfad um die Achse herum ist.

11. Verfahren zum Zuführen von zu verarbeitenden Arbeitserzeugnissen zu einer Multistationen-Verarbeitungsvorrichtung und zum Entnehmen der verarbeiteten Arbeitserzeugnisse aus der Verarbeitungsvorrichtung, das Folgendes umfasst:
Aufnehmen von zu verarbeitenden Arbeitserzeugnissen an einer Aufnahmestation (44) aus einem Strom von zu verarbeitenden Arbeitserzeugnissen, **gekennzeichnet durch**
das Bewegen von zu verarbeitenden Arbeitserzeugnissen von der Aufnahmestation (44) entlang eines bogenförmigen Pfads im Uhrzeigersinn zu einer ersten Verarbeitungsstation (48) und gegen den Uhrzeigersinn zu einer zweiten Verarbeitungsstation (50); und
das Bewegen der Arbeitserzeugnisse nach ihrer Verarbeitung entlang des bogenförmigen Pfads von der ersten Verarbeitungsstation (48) zu der Ausgabestation (46) und von der zweiten Verarbeitungsstation (50) zu der Ausgabestation (46).

12. Verfahren nach Anspruch 11, wobei die Arbeitserzeugnisse von der Aufnahmestation (44) zu der ersten und der zweiten Verarbeitungsstation (48, 50) entlang des bogenförmigen Pfads durch eine um eine Achse drehbare Schwenkarmanordnung bewegt werden.

13. Verfahren nach Anspruch 12, wobei sich die Schwenkarmanordnung in einer ersten Richtung um die Achse herum dreht, um Arbeitserzeugnisse von der Aufnahmestation (44) zu der ersten Verarbeitungsstation (48) zu bewegen, und sich um die Achse herum in einer zweiten Richtung dreht, um Arbeitserzeugnisse von der Aufnahmestation (44) zu der zweiten Verarbeitungsstation (50) zu bewegen.

14. Verfahren nach einem der Ansprüche 12-13, das ferner das Halten der Arbeitserzeugnisse an der Schwenkarmanordnung umfasst, während die Schwenkarmanordnung die Arbeitserzeugnisse von der Aufnahmestation (44) zu der ersten und der zweiten Verarbeitungsstation (48, 50) bewegt.

15. Multikopf-Verschließvorrichtung zum Versiegeln der Oberseiten von Behältern mit Deckeln, wobei die Vorrichtung ein Indexierungssystem nach einem der Ansprüche 1-10 umfasst, umfassend:
wobei die Aufnahmestation (44) dazu konfiguriert ist, Behälter aufzunehmen, an denen Deckel versiegelt werden sollen, und die Ausgabestation (46) dazu konfiguriert, Behälter mit daran versiegelten Deckeln von der Plattform zu entfernen, wobei die Aufnahmestation (44) und die Ausgabestation (46) sich diametral gegenüberliegend zueinander auf dem bogenförmigen Pfad relativ zur Achse befinden; und
mindestens zwei Versiegelungsstationen, an denen Deckel an den Behältern versiegelt werden, wobei eine erste Versiegelungsstation auf dem bogenförmigen Pfad positioniert ist, der sich im Uhrzeigersinn von der Aufnahmestation in Richtung der Ausgabestation erstreckt, und eine zweite Versiegelungsstation auf dem bogenförmigen Pfad positioniert ist, der sich gegen den Uhrzeigersinn von der Aufnahmestation (44) in Richtung der Ausgabestation (46) erstreckt; und
wobei die Schwenkarmanordnung (60) dazu konfiguriert ist, um die Schwenkachse herum drehbar zu kippen, um die Behälter von der Aufnahmestation (44) im Uhrzeigersinn zu der ersten Versiegelungsstation und gegen den Uhrzeigersinn zu der zweiten Versiegelungsstation zu bewegen.

## Revendications

1. Système d'indexage (10) pour un appareil multi-stations pour traiter des produits d'usinage, le système d'indexage comprenant :
une plateforme d'indexage multi-positions (20) ayant une pluralité de stations agencées le long d'un trajet arqué sur un axe, les stations comprenant :
une station de réception (44) pour recevoir des produits d'usinage pour le traitement,
au moins deux stations de traitement (48, 50) où des produits d'usinage sont traités, une seconde station de traitement (50) positionnée sur le trajet arqué s'étendant dans le sens anti-horaire de la station de réception (44) vers une station de décharge (46) de laquelle des produits d'usinage qui ont été traités sont retirés de la plateforme (20), la station de décharge (46) étant située sur le trajet arqué en aval des stations de traitement (48, 50) ; **caractérisé par** une première station de traitement (48) positionnée sur le trajet arqué s'étendant dans le sens horaire de la station de réception (44) vers la station de décharge (46), et
un ensemble de bras de pivot (60) rotatif sur l'axe pour déplacer les produits d'usinage venant de la station de réception (44) dans un sens horaire vers la première station de traitement (48) et dans un sens anti-horaire vers la seconde station de traitement (50).

2. Système d'indexage selon la revendication 1, dans lequel l'ensemble de bras de pivot (60), lorsqu'il tourne sur l'axe pour retirer les produits d'usinage de la station de réception (44) vers une station de traitement, déplace également les produits d'usinage traités de la station de traitement vers la station de décharge (46).

3. Système d'indexage selon la revendication 1 ou 2, dans lequel l'ensemble de bras de pivot (60) comprend un premier bras de pivot (64) rotatif sur l'axe dans les sens horaire et anti-horaire pour déplacer les produits d'usinage de la station de réception (44) vers les stations de traitement (48, 50) et des stations de traitement (48, 50) vers la station de décharge (46).

4. Système d'indexage selon la revendication 3, dans lequel le premier bras de pivot (64) est rotatif sur l'axe central dans le sens horaire pour pousser les produits d'usinage de la station de réception (44) vers la première station de traitement (48) et est rotatif sur l'axe central dans le sens anti-horaire pour pousser les produits d'usinage de la station de réception (44) vers la seconde station de traitement (50).

5. Système d'indexage selon la revendication 4, dans lequel lorsque le premier bras de pivot (64) est rotatif sur l'axe dans le sens horaire pour déplacer les produits d'usinage de la station de réception (44) vers la première station de traitement (48), le premier bras de pivot (64) est en position sans autre mouvement, pour tourner sur l'axe central dans le sens anti-horaire pour déplacer les produits d'usinage de la station de réception (44) vers la seconde station de traitement (50).

6. Système d'indexage selon l'une quelconque des revendications 3-5, dans lequel le premier bras de pivot (64) présente des parties définissant une surface de contact pour supporter les produits d'usinage lorsque les produits d'usinage sont poussés de la station de réception (44) vers les première et seconde stations de traitement (48, 50).

7. Système d'indexage selon la revendication 3, dans lequel l'ensemble de bras de pivot (60) comprend un second bras de pivot (70) s'étendant latéralement du premier bras de pivot (64) et rotatif sur l'axe dans les sens horaire et anti-horaire pour retenir les produits d'usinage contre le premier bras de pivot (64) à mesure que les produits d'usinage se déplacent de la station de réception (44) vers les première et seconde stations de traitement (48, 50).

8. Système d'indexage selon la revendication 7, dans lequel le second bras de pivot (70) déplace le produit d'usinage des première et seconde stations de traitement (48, 50) vers la station de décharge (46) à mesure que le premier bras de pivot (64) déplace les produits d'usinage de la station de réception (44) vers les première et seconde stations de traitement (48, 50).

9. Système d'indexage selon la revendication 7 ou 8, dans lequel le second bras de pivot (70) est extensible par rapport au premier bras de pivot (64) pour être disposé par rapport au premier bras de pivot (64) dans une position d'avancement en rotation à mesure que le premier bras de pivot (64) tourne dans les sens horaire ou anti-horaire.

10. Système d'indexage selon l'une quelconque des revendications 1-9, dans lequel le trajet le long duquel la pluralité de stations sont agencées est un trajet circulaire autour de l'axe.

11. Procédé de présentation de produits d'usinage à traiter à un appareil de traitement multi-stations et de retrait des produits d'usinage traités de l'appareil de traitement, comprenant :
de recevoir des produits d'usinage à traiter sur une station de réception (44) venant d'un flux de produits d'usinage à traiter, **caractérisé par**
le déplacement des produits d'usinage à traiter de la station de réception (44) le long d'un trajet arqué dans un sens horaire vers une première station de traitement (48) et dans un sens anti-horaire vers une seconde station de traitement (50) ; et
le déplacement des produits d'usinage après traitement le long du trajet arqué de la première station de traitement (48) vers la station de décharge (46) et de la seconde station de traitement (50) vers la station de décharge (46).

12. Procédé selon la revendication 11, dans lequel les produits d'usinage sont déplacés de la station de réception (44) vers les première et seconde stations de traitement (48, 50) le long du trajet arqué par un ensemble de bras oscillant rotatif sur un axe.

13. Procédé selon la revendication 12, dans lequel l'ensemble de bras oscillant tourne dans une première direction sur l'axe pour déplacer les produits d'usinage de la station de réception (44) vers la première station de traitement (48) et tourne sur l'axe dans une seconde direction pour déplacer les produits d'usinage de la première station de réception (44) vers la seconde station de traitement (50).

14. Procédé selon l'une quelconque des revendications 12-13, comprenant en outre de retenir les produits d'usinage sur l'ensemble de bras oscillant à mesure que l'ensemble de bras oscillant déplace les produits d'usinage de la station de réception (44) vers les première et seconde stations de traitement (48, 50).

15. Appareil de sertisseuse multi-têtes pour fermer hermétiquement les dessus de récipients par des couvercles, l'appareil comprenant un système d'indexage selon l'une quelconque des revendications 1-10, comprenant :
la station de réception (44) étant configurée pour recevoir des récipients sur lesquels des couvercles doivent être fermés hermétiquement, et la station de décharge (46) de laquelle les récipients avec les couvercles fermés hermétiquement dessus sont configurés pour être retirés de la plateforme, la station de réception (44) et la station de décharge (46) étant situées sur le trajet arqué de manière diamétralement opposée l'une à l'autre par rapport à l'axe ; et
au moins deux postes de fermeture étanche dans lesquels des couvercles sont fermés hermétiquement sur les récipients, une première station de fermeture étanche positionnée sur le trajet arqué s'étendant dans le sens horaire de la station de réception vers la station de décharge, et une seconde station de fermeture étanche positionnée sur le trajet arqué s'étendant dans le sens anti-horaire de la station de réception (44) vers la station de décharge (46) ; et
l'ensemble de bras de pivot (60) étant configuré pour basculer en rotation sur l'axe de pivot pour déplacer les récipients de la station de réception (44) dans un sens horaire vers la première station de fermeture étanche et dans un sens anti-horaire vers la seconde station de fermeture étanche.
